# EUROPEAN PATENT APPLICATION

(11) **EP 4 397 199 A1**
(43) Date of publication of application: **10.07.2024**
(21) Application number: 22863547.0
(22) Date of filing: 31.08.2022
(51) Int. Cl.: A24F 40/46, A24F 40/40

(54) **AEROSOL GENERATION DEVICE**

(30) Priority: 02.09.2021 CN 202122116434 U
(71) Applicant: Shenzhen First Union Technology Co., Ltd., Shenzhen, Guangdong 518000 (CN)
(72) Inventor: LU, Zhiming, Shenzhen, Guangdong 518000 (CN); XU, Zhongli, Shenzhen, Guangdong 518000 (CN); LI, Yonghai, Shenzhen, Guangdong 518000 (CN)
(74) Representative: Proi World Intellectual Property GmbH
(86) International application number: PCT/CN2022/116329
(87) International publication number: WO 2023/030412

(57) **Abstract**

An aerosol generation device (100) is provided. The aerosol generation device includes: a housing, having a first end and a second end opposite to the first end; a bracket (104), arranged in housing, where the bracket (104) is provided with an accommodation compartment (104a) arranged close to the first end and an extension portion (104b) extending from the accommodation compartment (104a) towards the second end; a heating assembly (108), at least partially accommodated in the accommodation compartment (104a), where the heating assembly (108) is configured to heat an inhalable material to generate an aerosol; and a circuit board (106), where one end is kept at the accommodation compartment (104a), and an other end is kept at the extension portion (104b). Through the bracket (104) provided with the accommodation compartment (104a) and the extension portion (104b), the heating assembly (108) is accommodated, and the circuit board (106) is kept on the bracket (104). Therefore, this structure design is compact, and mounting and wiring are convenient.

## Description

### CROSS-REFERENCE TO RELATED APPLICATIONS

This application claims priority to Chinese Patent Application No. 202122116434.6, filed with the China National Intellectual Property Administration on September 2, 2021 and entitled "AEROSOL GENERATION DEVICE", which is incorporated herein by reference in its entirety.

### TECHNICAL FIELD

This application relates to the field of cigarette device technologies, and in particular, to an aerosol generation device.

### BACKGROUND

During use of smoking objects such as cigarettes or cigars, tobaccos are burnt to generate vapor. A product that releases compounds without burning has been tried to provide an alternative for the objects that burn tobaccos. An example of the product is a so-called heat-not-bum product, which releases compounds by heating tobaccos rather than burning tobaccos.

In a process of implementing this application, the inventor finds that, an existing cigarette device has the following problems: an internal structure is not compact and mounting is time-consuming and laborious.

### SUMMARY

This application provides an aerosol generation device, to resolve the problem that an internal structure of an existing cigarette device is not compact.

This application provides an aerosol generation device, including:
a housing, having a first end and a second end opposite to the first end;
a bracket, arranged in the housing, where the bracket is provided with an accommodation compartment arranged close to the first end and an extension portion extending from the accommodation compartment towards the second end;
a heating assembly, at least partially accommodated in the accommodation compartment, where the heating assembly is configured to heat an inhalable material to generate an aerosol; and
a circuit board, where one end is kept at the accommodation compartment, and an other end is kept at the extension portion. According to the aerosol generation device provided in this application, through the bracket provided with the accommodation compartment and the extension portion, the heating assembly is accommodated, and the circuit board is kept on the bracket. Therefore, this structure design is compact, and mounting and wiring are convenient.

### BRIEF DESCRIPTION OF THE DRAWINGS

One or more embodiments are exemplarily described with reference to the corresponding figures in the accompanying drawings, and the descriptions do not constitute a limitation on the embodiments. Elements in the accompanying drawings that have same reference numerals are represented as similar elements, and unless otherwise particularly stated, the figures in the accompanying drawings are not drawn to scale.
FIG. 1 is a schematic diagram of an aerosol generation device according to an implementation of this application;
FIG. 2 is a schematic cross-sectional view of an aerosol generation device according to an implementation of this application;
FIG. 3 is a schematic exploded view of a heating assembly in an aerosol generation device according to an implementation of this application;
FIG. 4 is a schematic diagram of a heater according to an implementation of this application;
FIG. 5 is a schematic diagram of a bracket and a separating plate after assembly according to an implementation of this application;
FIG. 6 is a schematic diagram of a bracket according to an implementation of this application;
FIG. 7 is a schematic diagram of a bracket from another perspective according to an implementation of this application;
FIG. 8 is a schematic diagram of a separating plate according to an implementation of this application; and
FIG. 9 is a schematic diagram of a circuit board according to an implementation of this application.

### DETAILED DESCRIPTION

For ease of understanding of this application, this application is described in more detail below with reference to the accompanying drawings and specific implementations. It should be noted that, when an element is expressed as "being fixed to" another element, the element may be directly on the another element, or one or more intermediate elements may exist between the element and the another element. When an element is expressed as "being connected to" another element, the element may be directly connected to the another element, or one or more intermediate elements may exist between the element and the another element. The terms "upper", "lower", "left", "right", "inner", "outer", and similar expressions used in this specification are merely used for an illustrative purpose.

Unless otherwise defined, meanings of all technical and scientific terms used in this specification are the same as that usually understood by a person skilled in the technical field to which this application belongs. The terms used in this specification of this application are merely intended to describe objectives of the specific implementations, and are not intended to limit this application. The term "and/or" used in this specification includes any or all combinations of one or more related listed items.

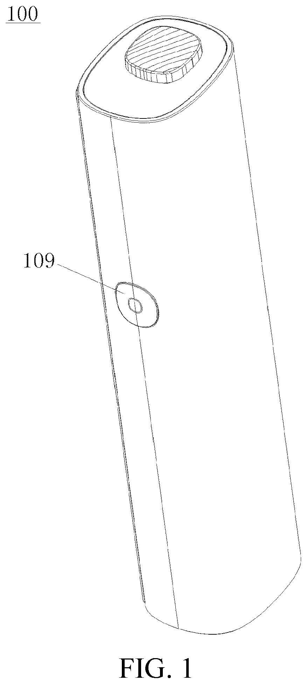

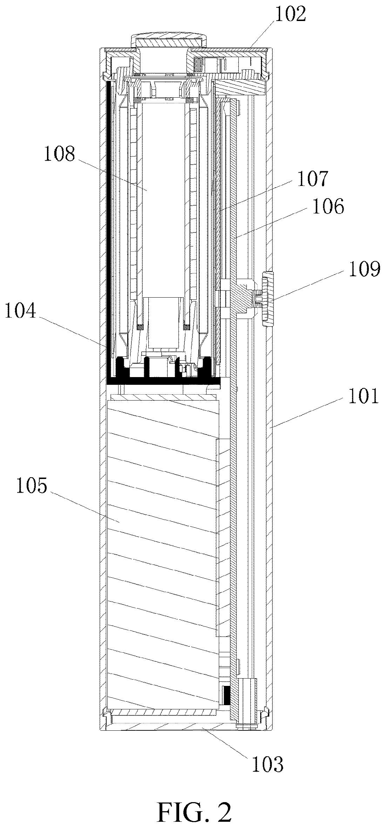

As shown in FIG. 1 and FIG. 2, an implementation of this application provides an aerosol generation device 100, including a housing, a bracket 104 accommodated in the housing, a battery cell 105, a circuit board 106, a separating plate 107, and a heating assembly 108.

The housing includes a body 101, an upper cap 102, and a bottom cap 103. The body 101 is approximately in a shape of a tube having openings at two ends, the upper cap 102 covers an upper end of the body 101, and the bottom cap 103 covers a lower end of the body 101, to form an accommodation space to accommodate the bracket 104, the battery cell 105, the circuit board 106, the separating plate 107, and the heating assembly 108.

The upper cap 102 is provided with a through hole and a cover, and the through hole may be opened or closed by moving the cover. An aerosol generation article is removably received in a chamber of the heating assembly 108 located in the housing through the through hole, the heating assembly 108 may heat the aerosol generation article to generate an inhalable aerosol, and a user may inhale the aerosol through a suction nozzle portion exposed outside the through hole. For the aerosol generation article, reference may be made to the related art, and details are not described herein.

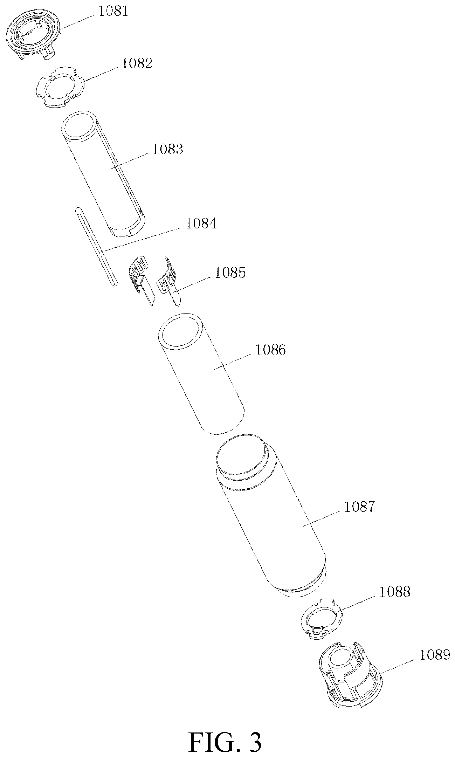

FIG. 3 is a schematic diagram of the heating assembly 108 according to an implementation of this application.

The heating assembly 108 includes an upper end cap 1081, a first seal member 1082, a heater 1083, a temperature detection element 1084, an electrode connector 1085, a heat insulating member 1086, a heat adiabatic member 1087, a second seal member 1088, and a lower end cap 1089.

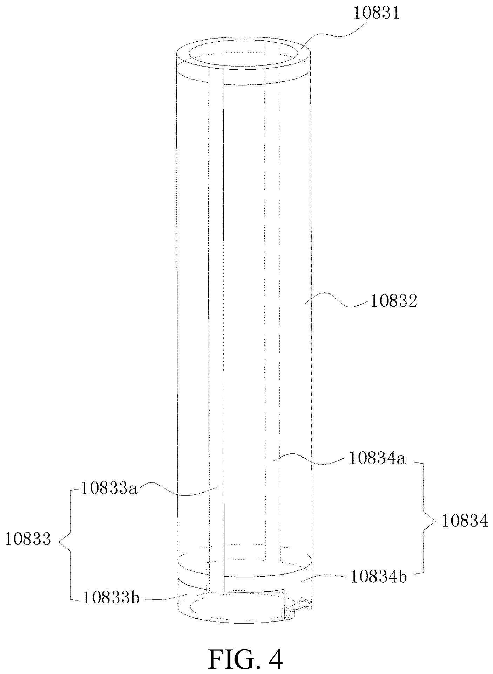

The heater 1083 is configured to generate an infrared ray to heat the aerosol generation article received in the chamber through radiation. As shown in FIG. 4, in an exemplary embodiment, the heater 1083 includes a substrate 10831, an infrared electric heating coating 10832, and a conductive element configured to guide a current to flow through the infrared electric heating coating 10832.

The substrate 10831 is configured to extend along an axial direction of the chamber and surround a tubular shape of the chamber.

Specifically, the substrate 10831 includes a first end and a second end, and a surface extending between the first end and the second end. The substrate 10831 may be in a shape of a cylinder, a prism, or another column. Preferably, the substrate 10831 is in a shape of a cylinder, at least a part of a cylindrical hole running through a middle portion of the substrate 10831 may be used to form the chamber configured to accommodate the aerosol generation article, and an inner diameter of the hole is slightly greater than an outer diameter of the aerosol generation article. In some examples, a cross section of the chamber may be in a shape of a circle, an ellipse, a polygon, or another suitable shape. Due to the suitable shape, an inner surface of the chamber may at least partially be in contact with an outer surface of the aerosol generation article or may not be in contact with an outer surface of the aerosol generation article completely. In some examples, the substrate 10831 may be made of a high temperature resistant and transparent material such as silica glass, ceramics, or mica, or may be made of another material with a high transmittance for an infrared ray.

The infrared electric heating coating 10832 is formed on a surface of the substrate 10831. For example, the infrared electric heating coating 10832 may be formed on an outer surface of the substrate 10831, or may be formed on an inner surface of the substrate 10831. The infrared electric heating coating 10832 receives electric power to generate heat, to further generate an infrared ray of a specific wavelength, for example, a far infrared ray whose wavelength ranges from 8 µm to 15 µm. When the wavelength of the infrared ray matches an absorption wavelength of an aerosol forming substrate, energy of the infrared ray is easily absorbed by the aerosol forming substrate, so that a temperature of the aerosol forming substrate rises to be higher than a preset temperature, and some components of the aerosol forming substrate is volatilized to form an inhalable aerosol.

The conductive element includes a first electrode 10833 and a second electrode 10834 arranged on the substrate 10831 at intervals, and is configured to feed the electric power to the infrared electric heating coating 10832. In some examples, both the first electrode 10833 and the second electrode 10834 are conductive coatings, and the conductive coating may be a metal coating or a conductive tape, where the metal coating may include at least one of silver, gold, palladium, yeum, copper, nickel, molybdenum, tungsten, niobium, or the foregoing metal alloy material. In some embodiments, the first electrode 10833 and the second electrode 10834 are arranged axisymmetrically about a center of the substrate 10831. The first electrode 10833 includes a coupling electrode 10833b and a stripline electrode 10833a, the second electrode 10834 includes a coupling electrode 10834b and a stripline electrode 10834a, the coupling electrode 10833b and the coupling electrode 10834b are not in contact with the infrared electric heating coating 10832, and the stripline electrode 10833a and the stripline electrode 10834a are at least partially in contact with the infrared electric heating coating 10832 to form electrical connections. The coupling electrode 10833b and the coupling electrode 10834b are coupled to the battery cell 105 through the electrode connector 1085.

It should be noted that, an infrared transmitter formed by the infrared electric heating coating 10832, the first electrode 10833, and the second electrode 10834 is not limited to the examples in FIG. 3 and FIG. 4. In other examples, the infrared transmitter may include a heat activated infrared radiation layer and a heat generation source, where the infrared radiation layer may not be an electromotive activated infrared radiation layer; or the infrared transmitter may include a thin film wound on the substrate 10831.

It should be further noted that, different from the examples in FIG. 3 and FIG. 4, in other examples, the heater 1083 may alternatively be constructed as a resistance heating heater or an electromagnetic heating heater.

The upper end cap 1081 and the lower end cap 1089 are made of dielectric, high temperature resistant, and heat insulating materials. The upper end cap 1081 is sleeved on the first end of the substrate 10831, the lower end cap 1089 is sleeved on the second end of the substrate 10831, the first seal member 1082 is arranged between the upper end cap 1081 and the first end of the substrate 10831, and the second seal member 1088 is arranged between the lower end cap 1089 and the second end of the substrate 10831. Therefore, the aerosol generated in the substrate 10831 may be prevented from entering a space between the outer surface of the substrate 10831 and the heat adiabatic member 1087 and corroding the infrared electric heating coating 10832 and the conductive coating on the outer surface of the substrate 10831, thereby improving the working reliability of the heater 1083.

The temperature detection element 1084 is configured to sense temperature information of the heater 1083. The electrode connector 1085 is connected to the coupling electrodes of the first electrode 10833 and the second electrode 10834. The heat insulating member 1086 and the heat adiabatic member 1087 are sequentially sleeved on the substrate 10831 along a radial direction of the chamber. In an exemplary embodiment, the heat insulating member 1086 includes aerogel, and the heat adiabatic member 1087 includes a double-layered tube arranged along the radial direction of the chamber. Two end portions of the double-layered tube are constructed to be closed to form a closed space between the double-layered tube, and the closed space between the double-layered tube may be filled with gas or vacuumized. For example, an intensity of air pressure in the closed space is less than an intensity of air outside the double-layered tube.

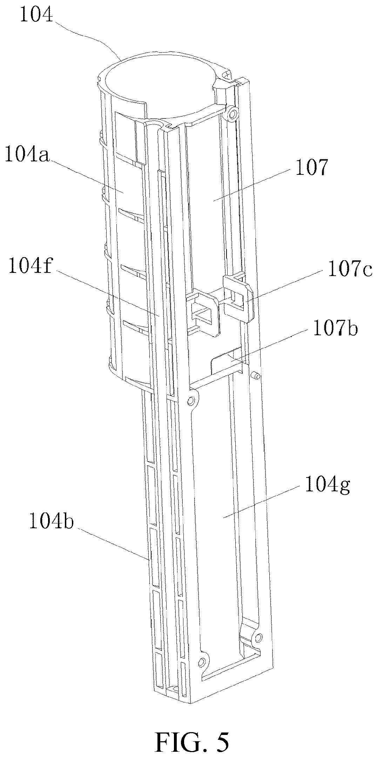

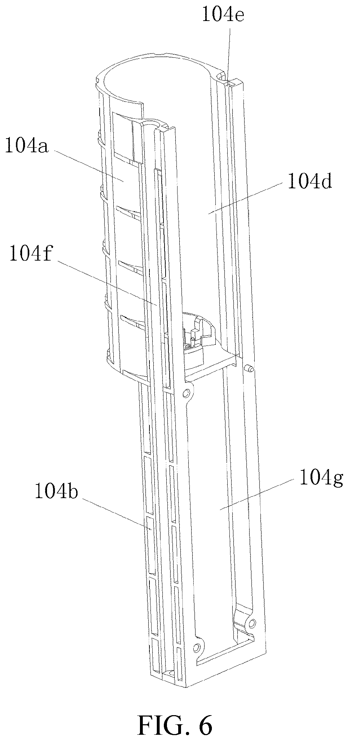

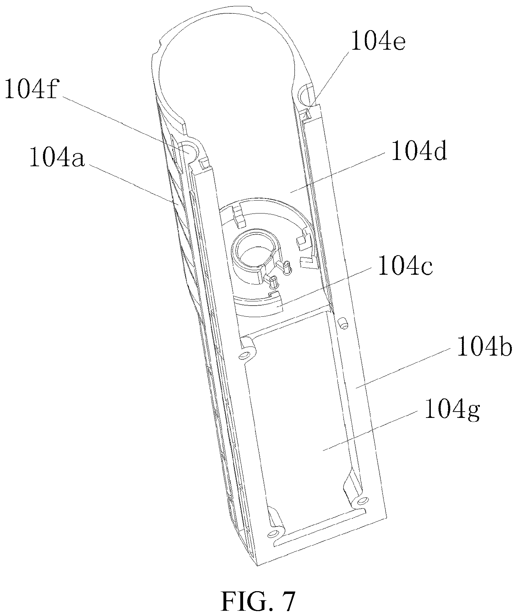

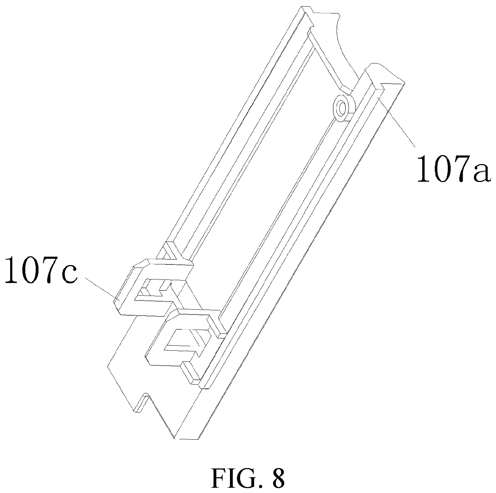

As shown in FIG. 5 to FIG. 8, the bracket 104 is arranged in the body 101. The bracket 104 is provided with an accommodation compartment 104a arranged close to the upper end of the body 101 and an extension portion 104b extending from the accommodation compartment 104a towards the lower end of the body 101. The accommodation compartment 104a and the extension portion 104b may be integrally formed or may be separately assembled. For ease of fixing the bracket 104 in the body 101, the bracket 104 is provided with a second mounting groove 104f, an inner wall of the body 101 is provided with a convex column (not shown in the accompanying drawings) protruding towards the bracket 104, and the bracket 104 is kept in the body 101 through cooperation between the convex column and the second mounting groove 104f. In this example, a part of the second mounting groove 104a is formed on a side wall of the accommodation compartment 104a, and an other part of the second mounting groove 104f is formed on the extension portion 104b.

The accommodation compartment 104a is approximately in a shape of a tube, and is provided with an open end arranged close to the upper end of the body 101 and a closed end opposite to the open end; and the closed end is provided with a keeping portion 104c protruding towards the open end, the keeping portion 104c is configured to keep one end of the heating assembly 108, and an other end of the heating assembly 108 is arranged close to the open end or extends out of the open end.

For ease of assembling the heating assembly 108 onto the closed end, the side wall of the accommodation compartment 104a is provided with a notch groove 104d, and the notch groove 104d extends from the open end to the closed end.

Further, for ease of separating the space in the accommodation compartment 104a from other components (for example, the circuit board 106), a separating plate 107 is detachably mounted at the notch groove 104d. The accommodation compartment 104a is provided with a first mounting groove 104e, the separating plate 107 is provided with a guide rail 107a, and the separating plate 107 is detachably mounted at the notch groove 104d through cooperation between the guide rail 107a and the first mounting groove 104e. It may be easily figured out that, it is also feasible to provide the first mounting groove 104e on the separating plate 107 and provide the guide rail 107a on the accommodation compartment 104a

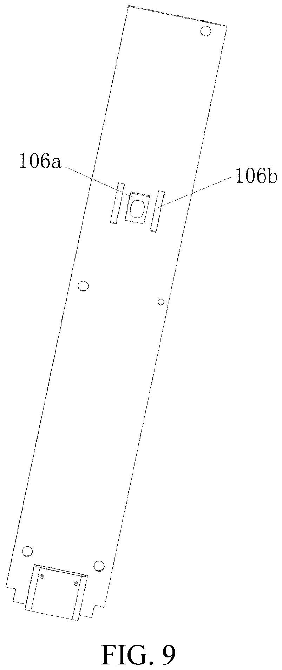

As shown in FIG. 9, a control circuit on the circuit board 106 may control an overall operation of the aerosol generation device 100. The control circuit not only controls operations of the battery cell 105 and the heater 1083, but also controls operations of other elements in the aerosol generation device 100. For example, the control circuit obtains a temperature parameter of the heater 1083 that is sensed by the temperature detection element 1084, and controls electricity provided by the battery cell 105 to the heater 1083 according to the parameter.

In this example, one end of the circuit board 106 is kept at the separating plate 107, and an other end is kept at the extension portion 104b. For ease of an electrical connection between the heating assembly 108 and the circuit board 106, the separating plate 107 is provided with a first via 107b, and the aerosol generation device 100 further includes a first lead (not shown in the accompanying drawings); and one end of the first lead is electrically connected to the heating assembly 108, and an other end may extend through the first via 107b to the outside of the accommodation compartment 104a to be electrically connected to the circuit board 106.

Further, the separating plate 107 is further provided with a connection portion 107c, the circuit board 106 includes a press switch 106a and an opening groove 106b, and the aerosol generation device 100 further includes a button 109 that is exposed outside the body 101 and is arranged on the press switch 106a; and the connection portion 107c runs through the opening groove 106b to be connected to the button 109, to keep the button 109.

The battery cell 105 provides the electricity for operating the aerosol generation device 100. For example, the battery cell 105 may provide electricity to heat the heater 1083. In addition, the battery cell 105 may provide electricity required for operating other elements provided in the aerosol generation device 100. The battery cell 105 may be a rechargeable battery or a disposable battery. The battery cell 105 may be, but is not limited to, a lithium iron phosphate (LiFePO4) battery. For example, the battery cell 105 may be a lithium cobaltate (LiGoO2) battery or a lithium titanate battery.

In this example, the battery cell 105 is arranged between the accommodation compartment 104a and the lower end of the body 101 (or the bottom cap 103) and is located on a side of the extension portion 104b. Further, for ease of an electrical connection between the battery cell 105 and the circuit board 106, the extension portion 104b is provided with a second via 104g, and the aerosol generation device 100 further includes a second lead; and one end of the second lead is electrically connected to the battery cell 105, and an other end may run through the second via 104g to be electrically connected to the circuit board 106. A foam provided with a double-sided adhesive may be arranged between the battery cell 105 and the circuit board 106, and the battery cell 105 is fixed to the circuit board 106 through the foam, thereby preventing the battery cell 105 from shaking.

It should be noted that, different from the examples in FIG. 5 to FIG. 8, in other examples, it is also feasible that the separating plate 107 and the bracket 104 are integrally formed.

It should be noted that, the specification of this application and the accompanying drawings thereof illustrate preferred embodiments of this application. However, this application may be implemented in various different forms, and is not limited to the embodiments described in this specification. These embodiments are not intended to be an additional limitation on the content of this application, and are described for the purpose of providing a more thorough and comprehensive understanding of the content disclosed in this application. Moreover, the foregoing technical features are further combined to form various embodiments not listed above, and all such embodiments shall be construed as falling within the scope of this application. Further, a person of ordinary skill in the art may make improvements or modifications according to the foregoing descriptions, and all the improvements and modifications shall fall within the protection scope of the appended claims of this application.

## Claims

1. An aerosol generation device comprising:
a housing, having a first end and a second end opposite to the first end;
a bracket, arranged in the housing, wherein the bracket is provided with an accommodation compartment arranged close to the first end and an extension portion extending from the accommodation compartment towards the second end;
a heating assembly, at least partially accommodated in the accommodation compartment, wherein the heating assembly is configured to heat an inhalable material to generate an aerosol; and
a circuit board, wherein one end is kept at the accommodation compartment, and an other end is kept at the extension portion.

2. The aerosol generation device according to claim 1, wherein a side wall of the accommodation compartment is provided with a notch groove.

3. The aerosol generation device according to claim 2, wherein the bracket further comprises a separating plate; and
the separating plate is detachably mounted at the notch groove, to separate the accommodation compartment and the circuit board.

4. The aerosol generation device according to claim 3, wherein the accommodation compartment is provided with a first mounting groove, and the separating plate is provided with a guide rail; or the accommodation compartment is provided with a guide rail, and the separating plate is provided with a first mounting groove; and
the guide rail cooperates with the first mounting groove to detachably mount the separating plate at the notch groove.

5. The aerosol generation device according to claim 3, wherein the separating plate is provided with a first via, and the aerosol generation device further comprises a first lead; and
one end of the first lead is electrically connected to the heating assembly, and an other end extends through the first via to the outside of the accommodation compartment to be electrically connected to the circuit board.

6. The aerosol generation device according to claim 1, wherein a side wall of the accommodation compartment is further provided with a connection portion, the circuit board comprises a press switch and an opening groove, and the aerosol generation device further comprises a button that is exposed outside the housing and is arranged on the press switch; and
the connection portion runs through the opening groove to be connected to the button, to keep the button.

7. The aerosol generation device according to claim 1, wherein the bracket is further provided with a second mounting groove, and an inner wall of the housing is provided with a convex column protruding towards the bracket; and
the convex column cooperates with the second mounting groove to keep the bracket in the housing.

8. The aerosol generation device according to claim 7, wherein a part of the second mounting groove is formed on a side wall of the accommodation compartment, and an other part of the second mounting groove is formed on the extension portion.

9. The aerosol generation device according to claim 1, wherein the accommodation compartment is provided with an open end arranged close to the first end and a closed end opposite to the open end; and
one end of the heating assembly is kept at the closed end, and an other end is arranged close to the open end or extends out of the open end.

10. The aerosol generation device according to claim 9, wherein the closed end is provided with a keeping portion protruding towards the open end, and the keeping portion is configured to keep the end of the heating assembly.

11. The aerosol generation device according to claim 1, wherein the aerosol generation device further comprises a battery cell, and the battery cell is arranged between the accommodation compartment and the second end and is located on a side of the extension portion.

12. The aerosol generation device according to claim 11, wherein the extension portion is provided with a second via, and the aerosol generation device further comprises a second lead; and
one end of the second lead is electrically connected to the battery cell, and an other end runs through the second via to be electrically connected to the circuit board.
